# EUROPEAN PATENT APPLICATION

(11) **EP 4 790 550 A1**
(43) Date of publication of application: **12.08.2026**
(21) Application number: 24938091.6
(22) Date of filing: 28.09.2024
(51) Int. Cl.: G06F 8/65

(54) **METHOD AND APPARATUS FOR CODE REPAIR, AND DEVICE AND PRODUCT**

(71) Applicant: Beijing Zitiao Network Technology Co., Ltd., Beijing 100190 (CN)
(72) Inventor: GAO, Pengfei, Beijing 100028 (CN); LIU, Yizhou, Beijing 100028 (CN); ZHANG, Zhao, Beijing 100028 (CN); PENG, Chao, Beijing 100028 (CN); SHI, Yexuan, Beijing 100028 (CN); CAO, Yunxiang, Beijing 100028 (CN); YANG, Ping, Beijing 100028 (CN)
(74) Representative: Marks & Clerk LLP
(86) International application number: PCT/CN2024/122083
(87) International publication number: WO 2026/065176

(57) **Abstract**

The present disclosure provides a method and an apparatus for repairing code, a computing device, a computer readable storage medium, and a computer program product. The method includes: determining, based on issue description, defective code in a code repository; selecting, based on the defective code and the issue description, a repair method from a static repair method and a dynamic repair method to repair the defective code; generating, based on the selected repair method, a candidate patch for repairing the defective code; determining whether the generated candidate patch is capable of repairing the defective code; and in response to determining that the candidate patch is incapable of repairing the defective code, determining to use the other repair method of the static repair method and the dynamic method to repair the defective code.

## Description

### FIELD

The present disclosure relates to the technical field of computers, and more specifically, to a method and an apparatus for repairing code, a computing device, a computer readable storage medium and a computer program product.

### BACKGROUND

Developers typically use version control and collaboration platforms to host and manage software code, which generally provide components to track and manage tasks, bug reports, feature requests, or the like, in projects. Users can adopt natural language to record various issues in the process of software development and application. These tools not only assist team members in describing in detail and tracking issues as well as repairing related code, but also provide collaboration platforms for the developers to discuss the solutions and implementation schemes.

However, with the growth of the project in terms of size and complexity, it is labor-intensive and time-consuming to manually handle the issues and repair code. In this case, a mechanism for automatically solving issues and repairing code is particularly important, which can greatly improve the developers' efficiency, allowing the developers to focus on more creative and more complex tasks. Therefore, there arises a need for developing an effective method for automatically solving issues and repairing code, to improve the team productivity.

### SUMMARY

In view of the above, embodiments of the present disclosure provide a method and an apparatus for repairing code, a computing device, a computer storage medium and a computer program product. By effectively combining static and dynamic repair methods, the present disclosure significantly enhances the efficiency and success rate of repairing defective code.

In a first aspect of the present disclosure, there is provided a method for repairing code, comprising: determining, based on issue description, defective code in a code repository; selecting, based on the defective code and the issue description, a repair method from a static repair method and a dynamic repair method to repair the defective code; generating, based on the selected repair method, a candidate patch for repairing the defective code; determining whether the generated candidate patch is capable of repairing the defective code; and in response to determining that the candidate patch is incapable of repairing the defective code, determining to use the other repair method of the static repair method and the dynamic method to repair the defective code.

In a second aspect of the present disclosure, there is provided an apparatus for repairing code, comprising: a defective code determining unit configured to determine, based on issue description, a defective code in a code repository; a repair method selecting unit configured to select, based on the defective code and the issue description, a repair method from a static repair method and a dynamic repair method to fix the defective code; a candidate patch generating unit configured to generate, based on the selected repair method, a candidate patch for repairing the defective code; a candidate patch determining unit configured to determine whether the generated candidate patch is capable of repairing the defective code; and a repair method switching unit configured to determine, in response to determining that the candidate patch cannot fix the defective code, to use the other repair method of the static repair method and the dynamic method to repair the defective code.

In a third aspect of the present disclosure, there is provided a computing device, comprising: at least one processing unit; and at least one memory coupled to the at least one processing unit and storing instructions executable by the at least one processing unit, wherein the instructions, when executed by the at least one processing unit, cause the computing device to perform the method in the first aspect of the present disclosure.

In a fourth aspect of the present disclosure, there is provided a non-transitory computer storage medium, comprising machine-executable instructions that, when executed by a device, cause the device to perform the method in the first aspect of the present disclosure.

In a fifth aspect of the present disclosure, there is provided a computer program product comprising machine-executable instructions that, when executed by a device, cause the device to perform the method in the first aspect of the present disclosure.

It would be appreciated that the Summary is not intended to identify key features or essential features of the present disclosure, nor is it intended to be used to limit the scope of the present disclosure. Other features of the present disclosure will be made apparent through the following description.

### BRIEF DESCRIPTION OF THE DRAWINGS

With reference to the following detailed description of the accompanying drawings, the above and other objectives, features, and advantages of the embodiments of the present disclosure will be made clearer. In the drawings, multiple embodiments of the present disclosure are depicted in an exemplary, but non-limiting, manner, where:
Fig. 1 illustrates a schematic diagram of an example environment where embodiments of the present disclosure can be implemented;
Fig. 2 illustrates a flowchart of a method for repairing code according to embodiments of the present disclosure;
Fig. 3 illustrates a schematic diagram of a structure of a code repair system according to embodiments of the present disclosure;
Fig. 4 illustrates a block diagram of an apparatus for repairing code according to embodiments of the present disclosure; and
Fig. 5 illustrates a block diagram of an electronic device according to embodiments of the present disclosure.

Throughout the drawings, the same or similar reference numerals represent the same or similar elements.

### DETAILED DESCRIPTION OF EMBODIMENTS

Reference below will be made to describe the embodiments of the present disclosure in detail. Although some embodiments of the present disclosure are depicted in the drawings, it would be appreciated that the present disclosure could be implemented in various forms and should not be construed as being restricted to the embodiments described herein. Rather, those embodiments are provided to enable a more thorough and complete understanding of the present disclosure. It is to be understood that the drawings and embodiments of the present disclosure are provided only exemplarily, but not used to limit the protection scope of the present disclosure.

As described herein, the term "includes" or similar expressions are to be read as open-ended terms that mean "includes, but is not limited to." The term "based on" is to be read as "based at least in part on." The term "an embodiment" or "the embodiment" is to be read as "at least one embodiment." The terms "first," "second," and the like may refer to different objects or the same object unless explicitly indicated otherwise. Other definitions, explicit and implicit, may be included below.

As mentioned above, if the issues in code can be automatically solved, the work efficiency of the development team can be greatly improved. However, in the existing industries and academia, it is typical to use either the dynamic repair method or the static repair method, to automatically solve issues in code. The dynamic repair method refers to a solution of writing a reproduction script based on information in issue description, running the reproduction script, and performing bug location and repair based on dynamic bug report information; the static repair method refers to a process of directly perform repair after retrieving the most related code snippet from a code repository based on information from the issue description. However, the two methods have their own shortcomings, respectively, resulting in a low success rate in solving the final issue.

In order to address or alleviate the above-mentioned problem and/or other potential problems, the embodiments of the present disclosure provide a method for repairing code. The method can greatly improve the efficiency and the success rate of repairing defective code by reasonably combining the static repair method with the dynamic repair method.

Hereinafter, reference will be made to the drawings to describe the basic principle and implementations of the present disclosure. It would be appreciated that the example embodiments are provided only to enable those skilled in the art to better understand and further carry out the embodiments of the present disclosure, rather than suggest any limitation to the scope of the present disclosure.

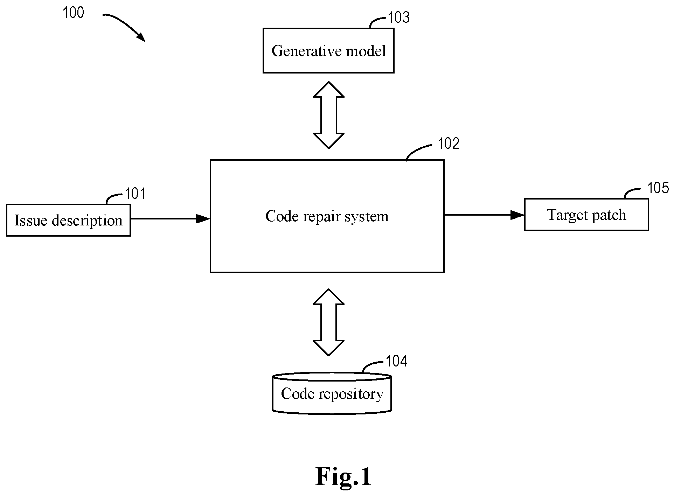

Fig. 1 illustrates a schematic diagram of an environment 100 where embodiments of the present disclosure can be implemented. As shown therein, the environment 100 may involve issue description 101, a code repair system 102, a generative model 103, a code repository 104 and a target patch 105. The code repository 104 can be used to store source code for development projects, and configured with a version control function, which can allow developers to track each code change, compare different versions, and return to the previous version if required. The code repository 104 can be developed by the developers, for example, on a remote server of a developer platform, for other users to load, learn and review. It would be appreciated that, in the present disclosure, the code repository 104 contains defective code that impacts normal operation of the source code in the code repository 104.

In some embodiments, the issue description 104 may be detailed description about defective code posted on, for example, the developer platform after a user discovers the defective code by running code in the code repository 104. In some embodiments, the issue description 101 may include a patch created by the user for repairing the defective code, or a reproduction file for reproducing the defect.

In some embodiments, the issue description 101 can be provided to the code repair system 102, to generate a target patch 105 for repairing the defective code. The code repair system 102 may generate a corresponding prompt based on the issue description 101, and input the prompt into the generative model 103 to obtain the target patch 105. In some embodiments, the code repair system 102 can be deployed in a local or a cloud server, which is not limited herein.

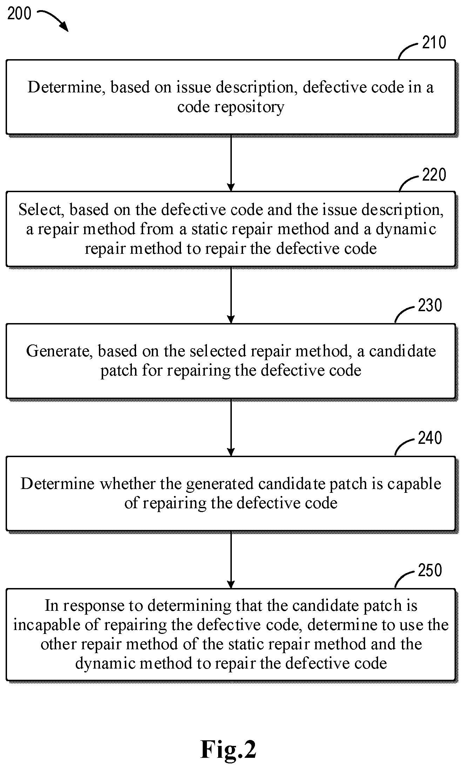

Reference below will be made to Fig. 2 to further describe a process of generating a target patch to repair defective code. Fig. 2 illustrates a flowchart of a method for repairing code according to embodiments of the present disclosure. In some embodiments, the method 200 can be implemented by, for example, the code repair system 102 as shown in Fig. 1. It would be appreciated that the method 200 may include additional actions not shown, and/or may omit the action shown therein, which is not limited herein.

As shown in Fig. 2, in block 210, the method may include: determining, based on issue description, defective code in a code repository. It may be difficult to locate code in the code repository 104, as the code is typically distributed across a plurality of different files.. In some embodiments, the code repair system 102 can identify the defective code based on the issue description 101 and/or a code knowledge graph. The code knowledge graph is an application of the knowledge graph technology in the field of code understanding and analysis, which can store code in the code repository 104 in the form of a database, and represent entities (e.g. variables, functions, classes, and the like), relationships (e.g., calling relationships, inheritance relationships, and the like) and attributes (e.g. types, scopes, and the like) of code in a structured way.

In some embodiments, the code repair system 102 may utilize the issue description 101 in conjunction with a code navigation tool integrated into the development environment to identify the defective code.. For example, the code repair system 102 can search for potential defects of code in the code repository 104 through a language server, where the defects include syntax errors, type mismatches, undefined variables or functions, and the like. In addition, the language server has further functions such as definition jumping, reference lookup, and the like. By leveraging these capabilities in combination with the issue description 101, the system can efficiently identify the defective code

In block 220, the method 200 may include: selecting, based on the defective code and the issue description, a repair method from a static repair method and a dynamic repair method to repair the defective code. The static repair method refers to a repair method where defective code is directly repaired without running an issue reproduction script, while the dynamic repair method refers to a repair method where defective code is debugged by running a tissue reproduction script. In some embodiments, the code repair system 102 can select, using the generative model 103, one of the static repair method and the dynamic repair method based on the defective code and the issue description 101.

For example, if the issue description 101 uploaded by the user is accompanied by a patch capable of directly repairing the defective code, the code repair system 102 can select the static repair method to repair the defective code. As another example, if the issue description 101 uploaded by the user is accompanied by a reproduction file capable of reproducing the code defect, the code repair system 102 can select the dynamic repair method to repair the defective code.

In block 230, the method 200 may include: generating, based on the selected repair method, a candidate patch for repairing the defective code. In some embodiments, if selecting the static repair method to repair the defective code, the code repair system 102 can determine an appropriate prompt based on the defective code and the issue description 101, and input the same into the generative model 103, to automatically generate a candidate patch. In order to avoid an uncontrollable output result of the generative model 103, in some embodiments, the code repair system 102 may generate preliminary candidate patches using the generative model 103, and then determine one from the preliminary candidate patches as the candidate patch, for example, by voting.

In some embodiments, if the dynamic repair method is selected to repair the defective code, the code repair system 102 can generate an issue reproduction file based on the issue description 101 and the defective code, to reproduce the code issue described in the issue description 101. Thereafter, the code repair system 102 can generate, using the generative model 103, a preliminary candidate patch based on the issue reproduction file.

After obtaining the preliminary candidate patch, the code repair system 102 can test the preliminary candidate patch, to determine whether it is capable of repairing the defective code. In order to keep the code repository 104 from being contaminated, in some embodiments, a test with respect to defective code repair can be performed in a sandbox environment. The sandbox environment is an isolated, secure computing environment for running untrusted code or applications, to prevent them from damaging other parts in the system or network. The sandbox environment works by limiting resources (e.g. a file system, a network, a memory, and the like) that applications or code can access, to ensure that the code even containing malicious behavior cannot cause serious impact on the entire system or network. If the preliminary candidate patch can repair the defective code, the code repair system 102 can use the preliminary candidate patch as the candidate patch. In some embodiments, if the preliminary candidate patch cannot repair the defective code, the code pair system 102 can re-generate a preliminary candidate patch until a preset threshold of regenerations is reached.

In block 240, the method 200 may include: determining whether the generated candidate patch is capable of repairing the defective code. Regardless of whether the candidate patch is selected from a plurality of preliminary patches using a static repair method or generated and tested using a dynamic repair method, the attempt to repair the defective code may still fail. In some embodiments, the code repair system 102 may perform a final test in a sandbox environment based on the candidate patch obtained through one of the repair methods, to verify whether the patch can successfully repair the defective code.

In block 250, the method 200 may include: in response to determining that the candidate patch is incapable of repairing the defective code, determining to use the other repair method of the static repair method and the dynamic method to repair the defective code. In some embodiments, the code repair system 102 can iteratively use the static repair method and the dynamic repair method until a candidate patch capable of repairing the defective code is obtained as the target patch. If the number of iterations reaches a preset threshold but no target patch is obtained, the code repair system 102 can select one from the historically generated candidate patches as the target patch.

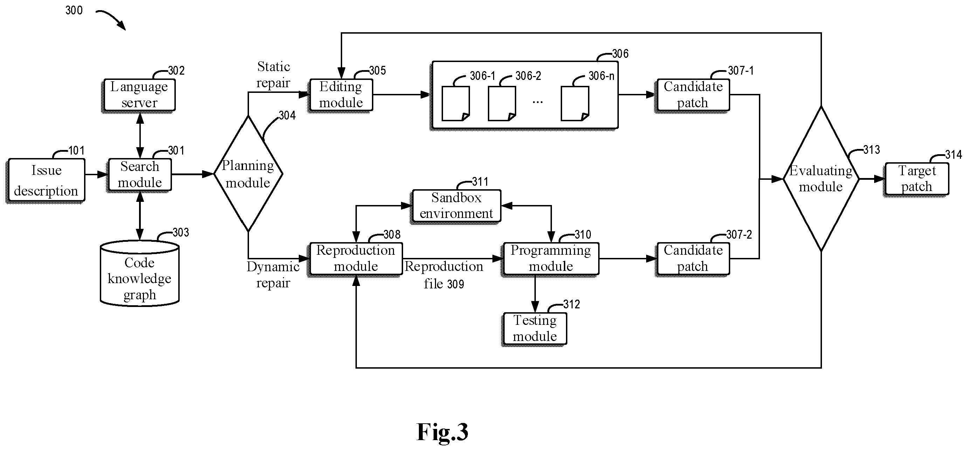

Reference below will be made to Fig. 3 to describe a process of repairing defective code based on issue description. Fig. 3 illustrates a schematic diagram of a structure of a code repair system 300 according to embodiments of the present disclosure. The code repair system 300 may be an example implementation of the code repair system 102 as shown in Fig. 1. As shown therein, the issue description 101 can be provided to a search module 301 of the code repair system 300, to determine defective code in the code repository. When the defective code is being determined, the search module 301 can combine with a language server 302 and a code knowledge graph 303, to improve the search efficiency.

In some embodiments, after the defective code has been determined, a planning module 304 of the code repair system 102 can determine whether the static repair method or the dynamic repair method is used to obtain a candidate patch 307 for repairing the defective code. If the planning module 304 determines to use the static repair method, an editing module 305 of the code repair system 102 can obtain a candidate patch 307-1. The editing module 305 can obtain, based on the issue description 101 and the defective code, preliminary candidate patches 306-1, 306-2 ...306-n (collectively referred to as candidate patch 306), and then select the one most likely to successfully repair the defective code as the candidate patch 307-1.

In some embodiments, after the candidate patch 307-1 has been obtained, an evaluating module 313 of the code repair system 102 determines whether the candidate patch 307-1 can successfully repair the defective code. If the candidate patch 307-1 can successfully repair the defective code, it is determined as the target patch 314. Otherwise, the evaluating module 313 may call a reproduction module 308 of the code repair system 102 to start a dynamic repair process and re-generate a candidate patch 307.

In the dynamic repair process, the reproduction module 308 can generate a reproduction file 309 based on the issue description 101 and the defective code, to reproduce the issue discovered by the user. Then, the reproduction file 309 can be provided to a programming module 310, to generate a preliminary candidate patch. A testing module 312 can receive the preliminary candidate patch and perform testing with respect to defective code repair. If the preliminary candidate patch can successfully repair the defective code, the code repair system 102 can directly determine it as the candidate patch 307-2, and further invoke the evaluating module 313 to perform additional testing to verify the effectiveness of the repair. Otherwise, the editing module 310 may re-generate a new preliminary candidate patch, and the testing module 312 can be invoked to perform preliminary testing thereon, until a preset threshold of re-generations is reached. In some embodiments, both the reproduction process and the testing process can be implemented in the sandbox environment 311, to prevent the code repository 104 from being contaminated.

If the evaluating module 314 determines the candidate patch 307-2 can successfully repair defective code, it is determined as the target patch 314. Otherwise, the evaluating module 313 calls the editing module 305 of the code repair system 102 to start a new round of the static repair process until the number of iterations of alternating the static repair method and the dynamic repair method reaches a preset threshold. If the evaluating module 313 still fails to detect a target patch that meets the requirements after the preset threshold has been reached, the code repair system 102 can select one of the historically generated candidate patches as the output result.

In some embodiments, the search module 301, the planning module 304, the editing module 305, the reproduction module 308, the programming module 310, the testing module 312 and the evaluating module 313, as described above, can be all connected to an agent of the generative model 103, each with its own specific targets and tasks. The agent is capable of making complex decisions and executing tasks by understanding and generating natural language , and possesses autonomous and interactive abilities. The agent can split a large task into smaller, manageable sub-goals based on the assigned goals and tasks, and plan future action paths.

Reference above has been made to Figs. 1-3 to describe the example embodiments of the present disclosure. As compared with the existing code repair method, the solution of repairing code defects according to the present disclosure can greatly improve the success rate of repairing defective code by effectively combining the static repair method and the dynamic repair method.

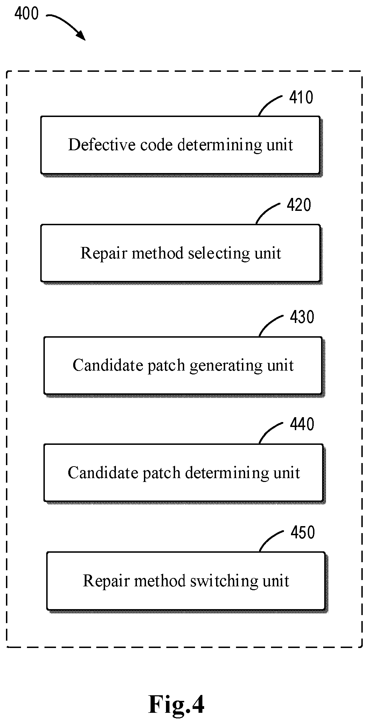

Fig. 4 illustrates a schematic block diagram of an apparatus 400 for repairing code according to embodiments of the present disclosure. As shown therein, the apparatus 400 includes: a defective code determining unit 410, a repair method selecting unit 420, a candidate patch generating unit 430, a candidate patch determining unit 440 and a repair method switching unit 450.

In some embodiments, the defective code determining unit 410 is configured to determine, based on issue description, a defective code in a code repository; the repair method selecting unit 420 is configured to select, based on the defective code and the issue description, a repair method from a static repair method and a dynamic repair method to fix the defective code; the candidate patch generating unit 430 is configured to generate, based on the selected repair method, a candidate patch for repairing the defective code; the candidate patch determining unit 440 is configured to determine whether the generated candidate patch is capable of repairing the defective code; and the repair method switching unit 450 is configured to determine, in response to determining that the candidate patch cannot fix the defective code, to use the other repair method of the static repair method and the dynamic method to repair the defective code.

It is worth noting that more actions or steps as shown in Figs. 1-3 can be implemented by the apparatus 400 as shown in Fig. 4. For example, the apparatus 400 may include more modules or units to implement the actions or steps described above, or some units or modules shown in Fig. 4 can be further configured to implement the actions or steps described above. Details are omitted here for brevity.

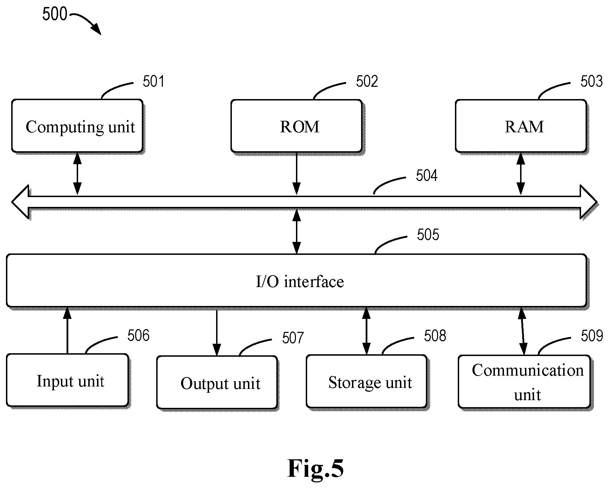

Fig. 5 illustrates an example block diagram of an example device 500 that can implement embodiments of the present disclosure. As shown therein, the device 500 may include a computing unit 501 which can execute various actions and processing based on programs stored in a Read Only Memory (ROM) 502 or a program loaded from a storage unit 506 to a Random Access Memory (RAM) 503. RAM 503 stores therein various programs and data required for operations of the device 500. The computing unit 501, the ROM 502, and the RAM 503 are connected to one another via a bus 504. An input/output (I/O) interface 505 is also connected to the bus 504.

A plurality of components in the device 500 may be connected to the I/O interface 505, including: an input unit 506 including, for example, a keyboard, a mouse, and the like; an output unit 507 including various types of displays, loudspeakers, and the like; a storage unit 508 including, for example, a magnetic disk, a compact disc, or the like; and a communication unit 509, for example, a network card, a modem, a wireless communication transceiver, or the like. The communication unit 509 can allow the device 500 to exchange information/data with other devices through a computer network such as Internet, and/or various kinds of telecommunication networks.

The computing unit 501 may be various types of general purpose and/or specific purpose processing components having a processing and computing capability. Some examples of the computing unit 501 include, but are not limited to, a Central Processing Unit (CPU), a Graphics Processing Unit (GPU), various types of specific-purpose Artificial Intelligence (AI) computing chips, various types of computing units having machine learning model algorithms run thereon, a Digital Signal Processor (DSP), any appropriate processor, controller, microcontroller, or the like. The computing unit 501 can execute various methods and processing described above, for example, the method 200. For example, the method 200 may be implemented as computer software programs that are tangibly included in a machine readable medium, e.g., the storage unit 508. In some embodiments, part or all of the computer programs may be loaded and/or mounted onto the device 500 via ROM 502 and/or communication unit 509. When the computer program is loaded to the RAM 503 and executed by the computing unit 501, the code repair system 102 in Fig. 1 or the code repair system 300 in Fig. 3, as described above can be carried out, or one or more steps of the method 200 as described above can be executed. Alternatively, in other embodiments, the computing unit 501 may be configured in any other appropriate manners (for example, by means of firmware) to implement the code repair system 102 in Fig. 1 or the code repair system 300 in Fig. 3, or perform the method 200.

In some embodiments, the method and process described above may be implemented as a computer program product. The computer program product may include a computer readable storage medium having stored thereon computer readable program instructions for performing various aspects of the present disclosure.

The computer readable storage medium may be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a Random Access Memory (RAM), a Read-Only Memory (ROM), an Erasable Programmable Read-Only Memory (EPROM or Flash memory), a Static Random Access Memory (SRAM), a portable Compact Disc Read-Only Memory (CD-ROM), a Digital Versatile Disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals *per se*, such as radio waves or other freely propagating electromagnetic waves, electromagnetic waves propagating through a waveguide or other transmission media (e.g., light pulses passing through a fiber-optic cable), or electrical signals sent through a wire.

Computer readable program instructions described herein can be downloaded to corresponding computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the corresponding computing/processing device.

Computer readable program instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language, and conventional procedural programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a Local Area Network (LAN) or a Wide Area Network (WAN), or the connection may be made to an external computer (for example, through the Internet using an Internet Service Provider). In some embodiments, electronic circuitry including, for example, programmable logic circuitry, Field-Programmable Gate Arrays (FPGAs), or Programmable Logic Arrays (PLAs) may execute the computer readable program instructions by utilizing state information of the computer readable program instructions to personalize the electronic circuitry, in order to perform aspects of the present disclosure.

These computer readable program instructions may be provided to a processing unit of a general purpose computer, special purpose computer, or other programmable data processing device to produce a machine, such that the instructions, when executed via the processing unit of the computer or other programmable data processing device, create apparatuses for implementing the functions/actions specified in the flowchart and/or block diagram block or blocks. These computer readable program instructions may also be stored in a computer readable storage medium that can direct a computer, a programmable data processing device, and/or other devices to function in a particular manner, such that the computer readable storage medium having instructions stored thereon includes an article of manufacture including instructions which implement aspects of the functions/actions specified in the flowchart and/or block diagram block or blocks.

The computer readable program instructions may also be loaded onto a computer, other programmable data processing devices, or other devices to cause a series of operational steps to be performed on the computer, other programmable devices or other devices to produce a computer implemented process, such that the instructions which are executed on the computer, other programmable devices, or other devices implement the functions/actions specified in the flowchart and/or block diagram block or blocks.

The flowchart and block diagrams illustrate the architecture, functionality, and operation of possible implementations of systems, methods and computer program products according to various embodiments of the present disclosure. In this regard, each block in the flowchart or block diagrams may represent a module, snippet, or portion of code, which includes one or more executable instructions for implementing the specified logical function(s). In some alternative implementations, the functions noted in the block may occur out of the order noted in the images. For example, two blocks in succession may, in fact, be executed substantially concurrently, or the blocks may sometimes be executed in the reversed order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or actions, or combinations of special purpose hardware and computer instructions.

The descriptions of the various embodiments of the present disclosure have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A method for repairing code, comprising:
determining, based on issue description, defective code in a code repository;
selecting, based on the defective code and the issue description, a repair method from a static repair method and a dynamic repair method to repair the defective code;
generating, based on the selected repair method, a candidate patch for repairing the defective code;
determining whether the generated candidate patch is capable of repairing the defective code; and
in response to determining that the candidate patch is incapable of repairing the defective code, determining to use the other repair method of the static repair method and the dynamic method to repair the defective code.

2. The method of claim 1, wherein determining the defective code in the code repository comprises:
determining the defective code in the code repository based on the issue description and a code knowledge graph, wherein the code knowledge graph stores code in the code repository in the form of a database.

3. The method of claim 1 or 2, wherein determining the defective code in the code repository comprises:
determining the defective code in the code repository based on the issue description and a code navigation tool built into an integrated development environment.

4. The method of any of claims 1-3, wherein selecting the repair method from the static repair method and the dynamic repair method to repair the defective code comprises:
selecting, using a generative model and based on the defective code and the issue description, one of the static repair method and the dynamic repair method, wherein the static repair method directly repairs the defective code without running an issue reproduction script, and the dynamic repair method repairs the defective code by running an issue reproduction script.

5. The method of any of claims 1-4, wherein, in a case that the selected repair method is the static repair method, generating the candidate patch for repairing the defective code comprises:
generating a plurality of preliminary candidate patches based on the defective code and the issue description; and
determining a preliminary candidate patch from the plurality of candidate patches as the candidate patch.

6. The method of any of claims 1-4, wherein, in a case that the selected repair method is the dynamic repair method, generating a candidate patch for repairing the defective code comprises:
generating an issue reproduction script based on the issue description and the defective code;
generating a preliminary candidate patch based on the issue reproduction script;
determining whether the generated preliminary candidate patch is capable of repairing the defective code; and
in response to determining that the preliminary candidate patch is capable of repairing the defective code, determining the preliminary candidate patch as the candidate patch.

7. The method of claim 6, further comprising:
in response to determining that the preliminary candidate patch is incapable of repairing the defective code, regenerating the preliminary candidate patch until a preset threshold number of regenerations is reached.

8. The method of any of claims 1-7, wherein determining whether the generated candidate patch is capable of repairing the defective code comprises:
determining, using a generative model, whether the candidate patch is capable of repairing the defective code.

9. The method of any of claims 1-8, further comprising:
obtaining a candidate patch capable of repairing the defective code as a target patch by iteratively using the static repair method and the dynamic repair method; and
in response to that a number of iterations reaches a preset threshold, selecting a candidate patch from a plurality of generated candidate patches as the target patch.

10. A system for code repairing, comprising:
a defective code determining unit configured to determine, based on issue description, a defective code in a code repository;
a repair method selecting unit configured to select, based on the defective code and the issue description, a repair method from a static repair method and a dynamic repair method to fix the defective code;
a candidate patch generating unit configured to generate, based on the selected repair method, a candidate patch for repairing the defective code;
a candidate patch determining unit configured to determine whether the generated candidate patch is capable of repairing the defective code; and
a repair method switching unit configured to determine, in response to determining that the candidate patch cannot fix the defective code, to use the other repair method of the static repair method and the dynamic method to repair the defective code.

11. A computing device, comprising:
at least one processing unit; and
at least one memory coupled to the at least one processing unit and storing instructions executable by the at least one processing unit, wherein the instructions, when executed by the at least one processing unit, cause the computing device to perform the method of any of claims 1-9.

12. A computer storage medium comprising machine-executable instructions that, when executed by a device, cause the device to perform the method of any of claims 1-9.

13. A computer program product comprising machine-executable instructions that, when executed by a device, cause the device to perform the method of any of claims 1-9.
